(19) Europäisches Patentamt / European Patent Office / Office européen des brevets

(11) **EP 2 415 179 B1**

(12) **FASCICULE DE BREVET EUROPEEN**

(45) Date de publication et mention
de la délivrance du brevet:
**04.03.2020 Bulletin 2020/10**

(21) Numéro de dépôt: **10717697.6**

(22) Date de dépôt: **31.03.2010**

(51) Int Cl.:
***H04B 3/54*** *(2006.01)*

(86) Numéro de dépôt international:
**PCT/FR2010/050607**

(87) Numéro de publication internationale:
**WO 2010/112769 (07.10.2010 Gazette 2010/40)**

(54) **DISPOSITIF ET SYSTEME DE COMMUNICATION SUR UNE LIGNE D'ALIMENTATION**

SYSTEM UND VORRICHTUNG ZUR KOMMUNIKATION ÜBER STROMVERSORGUNGSLEITUNGEN

APPARATUS AND SYSTEM FOR POWER LINE COMMUNICATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0952025**

(43) Date de publication de la demande:
**08.02.2012 Bulletin 2012/06**

(73) Titulaire: **ALSTOM Transport Technologies
93400 Saint-Ouen (FR)**

(72) Inventeur: **ORION, Jacques
F-38200 Vienne (FR)**

(74) Mandataire: **Lavoix
2, place d'Estienne d'Orves
75441 Paris Cedex 09 (FR)**

(56) Documents cités:
**GB-A- 2 154 834     US-A1- 2005 094 735**

**Description**

La présente invention est relative à un système de couplage entre une liaison filaire de communication présentant une impédance caractéristique de ligne et propre à transporter un signal comprenant simultanément une alimentation électrique et des données, et une unité de commande comportant une borne d'alimentation électrique et une borne de données, ledit système présentant une impédance d'entrée.

L'invention concerne également un appareil de commande d'au moins un interrupteur électronique, comprenant une unité de commande du ou de chaque interrupteur électronique, ladite unité comportant une borne d'alimentation électrique et une borne de données, et un système de couplage entre une liaison filaire de communication propre à transporter un signal comprenant simultanément une alimentation électrique et des données, et ladite unité de commande.

On connaît un système de couplage selon le préambule de la revendication 1 du document US 2005/0094735 A1. Un tel système sert à récupérer l'alimentation électrique et les données issus d'un unique signal transporté sur la liaison filaire, pour délivrer l'alimentation électrique à la borne d'alimentation de l'unité de commande d'une part, et les données à la borne de données de l'unité de commande d'autre part.

Toutefois, certaines données transmises par le système de couplage à l'unité de commande sont corrompues, et donc inexploitables par cette dernière. La distinction entre l'alimentation électrique et les données s'avèrent en effet délicate à réaliser pour le système de couplage.

Un but de l'invention est donc d'améliorer la transmission des données à l'unité de commande, en réduisant le taux de données corrompues par le système de couplage.

A cet effet, l'invention a pour objet un système de couplage selon la revendication 1.

L'inventeur a constaté que la corruption des données par le système de couplage est liée à la désadaptation entre l'impédance d'entrée du système et l'impédance caractéristique de la ligne, provoquée par la récupération de l'alimentation électrique.

Suivant d'autres modes de réalisation, le système de couplage est selon l'une quelconque des revendications 2 à 12.

L'invention a aussi pour objet un appareil de commande selon la revendication 13.

Ces caractéristiques et avantages de l'invention apparaîtront à la lecture de la description qui va suivre, données uniquement à titre d'exemple et faites en référence aux dessins annexés, sur lesquels :

- la figure 1 est une représentation schématique d'un appareil de commande d'un interrupteur électronique selon l'invention,
- la figure 2 est un schéma électrique d'un dispositif de récupération d'énergie d'un système de couplage de l'appareil de commande de la figure 1,
- la figure 3 est une représentation schématique d'un dispositif de transmission de données du système de couplage, selon un premier mode de réalisation de l'invention,
- la figure 4 est une courbe illustrant l'évolution en fonction de la fréquence d'un paramètre représentatif de l'adaptation d'impédance en entrée du système de couplage de l'appareil de la figure 1,
- la figure 5 est une vue analogue à celle de la figure 3, selon un deuxième mode de réalisation de l'invention,
- la figure 6 est une vue analogue à celle de la figure 2, selon un troisième mode de réalisation de l'invention,
- la figure 7 est un ensemble de courbes illustrant les spectres fréquentiels normalisés respectifs d'un premier signal d'information reçu en entrée du système de couplage et du signal correspondant en sortie d'un filtre du dispositif de transmission de données, et
- la figure 8 est un ensemble de courbes analogue à celui de la figure 7 pour un deuxième signal d'information reçu en entrée du système de couplage.

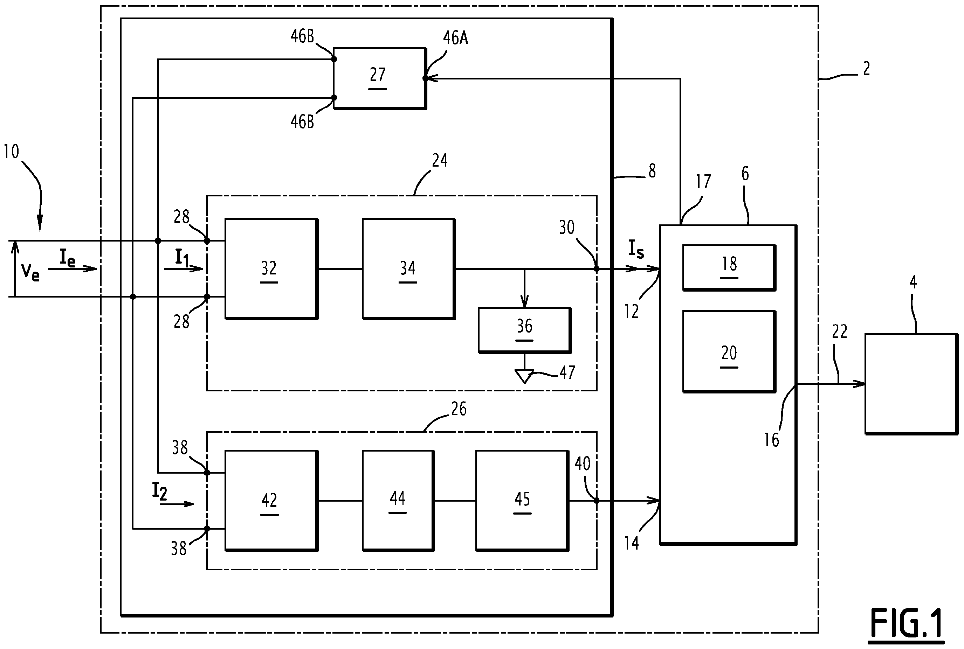

Sur la figure 1, un appareil 2 de commande d'un interrupteur électronique 4 comprend une unité 6 de commande de l'interrupteur et un système 8 de couplage entre une liaison filaire de communication 10 et l'unité de commande 6.

L'interrupteur électronique 4 est, par exemple, un interrupteur d'un onduleur de tension propre à alimenter un moteur électronique d'un véhicule de transport, notamment ferroviaire, l'onduleur de tension délivrant une tension de sortie triphasée à partir d'une tension d'entrée continue. L'interrupteur électronique 4 est, par exemple, un transistor bipolaire à grille isolée, également appelé transistor IGBT (de l'anglais Insulated Gate Bipolar Transistor), ou encore un thyristor.

L'unité de commande 6 comporte deux bornes d'entrée, à savoir une borne d'alimentation électrique 12 et une borne de données 14, et deux bornes de sortie 16, 17. Les bornes d'entrée 12, 14 sont reliées au système de couplage 8, une première borne de sortie 16 est reliée à l'interrupteur 4, et la seconde borne de sortie 17 est reliée au système de couplage 8.

L'unité de commande 6 comporte une unité de traitement d'informations formée par exemple, d'un processeur de données 18, associées à une mémoire 20. La mémoire 20 est apte à stocker un logiciel de calcul d'un signal 22 de commande de l'interrupteur 4 en fonction d'une modulation sélectionnée de largeur d'impulsion. La mémoire 20 est également apte à stocker un logiciel d'application du signal de commande 22 à l'interrupteur 4.

Le système de couplage 8 comprend un dispositif 24 de récupération d'énergie et un dispositif 26 de transmission de données, formant un appareil de réception d'un signal d'information depuis la liaison filaire de communication 10. Le système de couplage 8 est propre à récupérer l'alimentation électrique et les données issues d'un unique signal transporté sur la liaison filaire 10. Le système de couplage 8 comprend un appareil 27 d'émission d'un autre signal d'information sur la liaison filaire de communication 10. Le système de couplage 8 présente une impédance d'entrée $Z_e$ égale à $V_e/I_e$, où $V_e$, $I_e$ sont respectivement la tension et l'intensité d'un courant d'entrée du système de couplage 8.

La liaison filaire de communication 10 est propre à transporter des signaux d'informations, chaque signal d'information comprenant simultanément une alimentation électrique et des données. La liaison filaire 10 présente une impédance caractéristique de ligne $Z_0$. La liaison de communication 10 est, par exemple, une liaison série RS485, une liaison série RS482, ou encore une liaison Ethernet.

Le dispositif de récupération d'énergie 24 est relié en entrée à la liaison filaire de communication 10 via deux bornes d'entrée 28, et en sortie à la borne d'alimentation électrique 12 de l'unité de commande via une borne sortie 30. Le dispositif de récupération d'énergie 24 comprend un redresseur 32, un générateur de courant 34 et une charge variable 36.

Le dispositif de transmission de données 26 comporte deux bornes d'entrée 38 reliées à la liaison filaire de communication 10, et une borne de sortie 40 reliée à la borne de données 14. Le dispositif de transmission de données 26 comprend un atténuateur 42, un filtre 44 et un comparateur 45, agencés en série et dans cet ordre.

L'appareil d'émission 27 comporte une borne d'entrée 46A reliée à la seconde borne de sortie 17 de l'unité de commande, et deux bornes de sortie 46B reliées à la liaison filaire de communication 10.

Le redresseur 32 est relié en entrée aux bornes d'entrée 28 et en sortie au générateur de courant 34. Le redresseur 32 est propre à convertir un courant d'entrée alternatif en un courant de sortie continu.

Le générateur de courant 34 est relié en sortie à la borne de sortie 30.

La charge variable 36 est connectée entre la borne de sortie 30 et une masse électrique 47, en dérivation par rapport au redresseur 32 et au générateur de courant 34 agencés en série. La charge 36 est de valeur variable en fonction d'un courant de sortie $I_s$ consommé par l'unité de commande 6 en sortie du système 8. La charge variable 36 est propre à assurer la consommation d'un premier courant $I_1$ constant en entrée du dispositif d'énergie du courant 24.

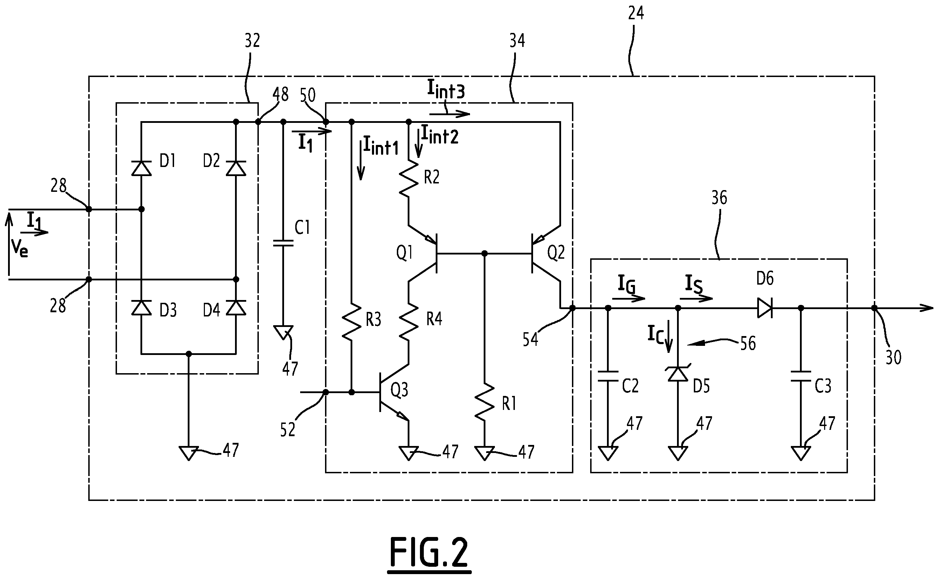

Le redresseur 32 est relié en entrée aux deux bornes d'entrée 28 du dispositif de récupération d'énergie, et comporte une borne de sortie 48, comme représenté sur la figure 2. Le redresseur 32 est réalisé, par exemple, sous forme d'un pont de diodes D1, D2, D3 et D4. Les diodes D1 à D4 sont, par exemple, des diodes Schottky à très faible capacité, de l'ordre du pF, afin de minimiser la perte d'énergie. La tension d'entrée du pont de diodes D1 à D4 est la tension $V_e$, et la tension de sortie du pont est mesurée entre un point de jonction entre les diodes D1 et D2 d'une part, et un point de jonction entre les diodes D3 et D4 relié à la masse électrique 47 d'autre part. Le point de jonction entre les diodes D1 et D2 est connecté à la borne de sortie 48.

Un condensateur de filtrage C1 est disposé entre le redresseur 32 et le générateur de courant 34. Le condensateur de filtrage C1 est connecté entre la borne de sortie 48 et la masse électrique 47. Sa valeur est choisie afin de stabiliser le générateur de courant, tout en s'assurant que le spectre du signal d'information reçu soit compris dans la bande passante du dispositif de récupération d'énergie 24.

Le générateur de courant 34 comporte une borne d'entrée 50, une borne de commande 52 et une borne de sortie 54. Le générateur de courant 34 comprend, par exemple, un premier et un deuxième transistors bipolaires Q1, Q2, identiques et reliés entre eux par leur base. Le point de jonction entre les deux bases est relié à la masse électrique 47 par l'intermédiaire d'une première résistance R1. L'émetteur du premier transistor bipolaire Q1 est relié à la borne d'entrée 50 par l'intermédiaire d'une deuxième résistance R2. L'émetteur du deuxième transistor bipolaire Q2 est directement connecté à la borne d'entrée 50, et le collecteur du deuxième transistor bipolaire Q2 est directement connecté à la borne de sortie 54 du générateur de courant. Les transistors bipolaires Q1, Q2 sont des transistors PNP. Les transistors bipolaires Q1, Q2 sont, par exemple, des transistors à très faible capacité, de l'ordre du pF.

Le générateur de courant 34 comporte un troisième transistor bipolaire Q3 de commande du premier transistor Q1. Le troisième transistor Q3 est un transistor NPN. La base du troisième transistor Q3 est reliée d'une part à la borne de commande 52, et d'autre part à la borne d'entrée 50 par l'intermédiaire d'une troisième résistance R3. Le collecteur du troisième transistor Q3 est relié au collecteur du premier transistor Q1 via une quatrième résistance R4, et l'émetteur du troisième transistor Q3 est relié à la masse électrique 47.

La charge variable 36, agencée en sortie du générateur de courant 34, comprend un réservoir de courant 56, deux condensateurs de stabilisation C2, C3, et une diode de protection D6. Le réservoir de courant 56 comporte une diode Zener D5. Un premier condensateur de stabilisation C2 est connecté en amont de la diode Zener D5, entre la borne de sortie 54 du générateur de courant et la masse électrique 47. La diode Zener D5 est connectée entre la borne de sortie 54 du générateur de courant et la masse électrique 47. La diode de protection D6 est agencée entre la borne de sortie 30 du dispositif de récupération d'énergie et la borne de sortie 54 du générateur de courant. Le second condensateur de stabilisation C3 est connecté en aval de la diode de protection D6, entre la borne de sortie 30 du dispositif de récupération d'énergie et la masse électrique 47.

L'atténuateur 42 est propre à diminuer fortement un deuxième courant $I_2$ consommé en entrée du dispositif de transmission de données 26. L'atténuateur 42 est un atténuateur d'au moins 30 décibels, de sorte que l'intensité du deuxième courant $I_2$ est inférieure ou égale à 1/20ème de l'intensité du premier courant $I_1$. La charge 36 est alors propre à assurer une valeur constante de l'intensité du courant d'entrée $I_e$ consommé par le système 8, l'intensité du courant d'entrée $I_e$ étant égale à la somme des intensités du premier courant $I_1$ et du deuxième courant $I_2$, et donc sensiblement égale à l'intensité du premier courant $I_1$.

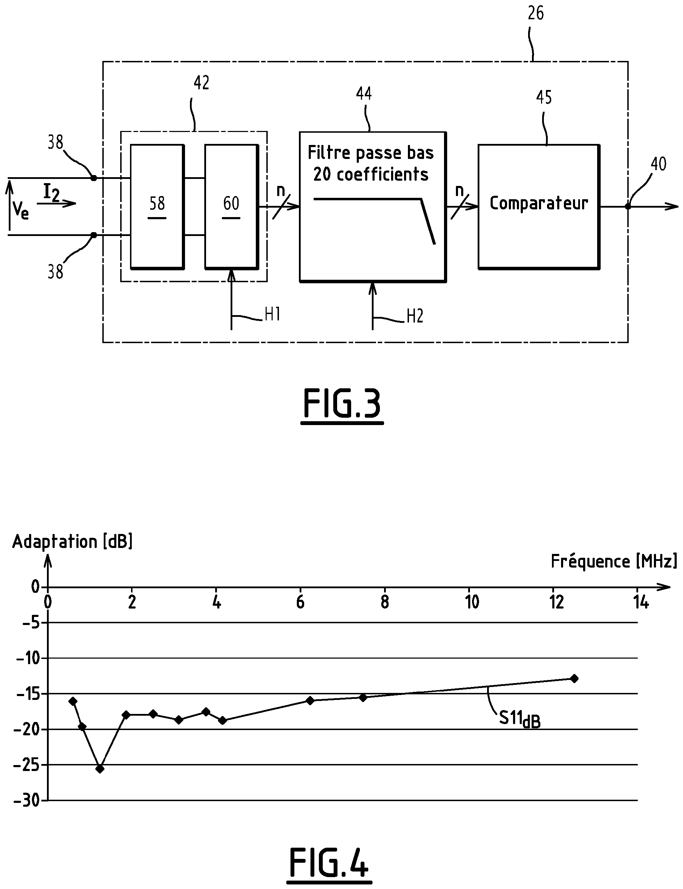

Dans l'exemple de réalisation de la figure 3, le dispositif de transmission de données 26 est réalisé à l'aide de composants numériques.

L'atténuateur 42 comporte un abaisseur de tension 58 et un convertisseur analogique numérique 60, disposé en sortie de l'abaisseur de tension 58. La tension d'entrée de l'abaisseur de tension 58 est égale à la tension $V_e$, et la tension de sortie de l'abaisseur de tension 58 est sensiblement égale à 1/25ème de ladite tension d'entrée $V_e$, de sorte que l'amplitude du signal en sortie de l'abaisseur de tension 58 est compatible avec la dynamique du convertisseur analogique numérique 60. Le convertisseur analogique numérique 60 est cadencé par une première horloge H1 de fréquence, par exemple, égale à 25 Mhz.

Le filtre 44 est un filtre passe-bas. Le filtre passe-bas 44 est, par exemple, un filtre à 20 coefficients présentant une fréquence de coupure à 1dB égale à 2,5 Mhz. L'atténuation du filtre passe-bas 44 est supérieure à 30 décibels pour une fréquence supérieure à 6 Mhz. Le filtre 44 est cadencé par une deuxième horloge H2 de fréquence égale à 25 Mhz.

En variante, le filtre passe-bas 44 présente une fréquence de coupure à 1dB égale à 3 Mhz, ou encore à 5 MHz.

Le comparateur 45 est un comparateur numérique.

Le fonctionnement du système de couplage 8 selon l'invention va à présent être décrit.

Lorsque le système de couplage 8 fonctionne en réception de signaux d'information, l'appareil d'émission 27 est mis en haute impédance, afin de consommer en entrée un courant d'intensité sensiblement nulle.

Le courant $I_e$ en entrée du système de couplage se divise alors entre le premier courant $I_1$ consommé par le dispositif de récupération d'énergie 24 et le deuxième courant $I_2$ consommé par le dispositif de transmission de données 26, le courant consommé par l'appareil d'émission 27 étant sensiblement nul. L'intensité du deuxième courant $I_2$ est nettement inférieure à celle du premier courant $I_1$, de préférence inférieure ou égale à 1/20ème de l'intensité du premier courant $I_1$, de par l'atténuateur 42. L'intensité du premier courant $I_1$ est donc sensiblement égale à l'intensité du courant d'entrée $I_e$.

Le redresseur 32 ne modifie pas l'intensité du courant le traversant de sorte que l'intensité du courant circulant à travers sa borne de sortie 48 est égale à l'intensité du premier courant $I_1$ circulant à travers ses bornes d'entrée 28.

L'intensité du courant circulant à travers la borne d'entrée 50 du générateur de courant est sensiblement égale à celle du courant circulant à travers la borne de sortie 48 du redresseur, l'intensité du courant circulant dans le condensateur C1 étant négligeable.

Un signal de commande délivré à la borne de commande 52 est envoyé de sorte que le générateur de courant 34 fonctionne « en miroir» de courant, les transistors Q1, Q2 étant identiques. Les transistors Q1, Q2 sont utilisés de manière dissymétrique de par la deuxième résistance R2, afin d'augmenter le rendement du générateur de courant 34. Le premier courant $I_1$ se divise alors en trois courants intermédiaires $I_{int1}$, $I_{int2}$, $I_{int3}$. Les premier $I_{int1}$, deuxième $I_{int2}$ et troisième $I_{int3}$ courants intermédiaires circulent à travers respectivement la troisième résistance R3, la deuxième résistance R2 et l'émetteur du deuxième transistor bipolaire Q2. L'intensité d'un courant de générateur $I_G$ circulant à travers la borne de sortie 54 du générateur de courant est égale à celle du troisième courant intermédiaire $I_{int3}$ qui est proportionnelle à celle du premier courant $I_1$ circulant à travers la borne d'entrée 50 du générateur de courant, de par le fonctionnement « en miroir » de courant du générateur de courant.

Le courant de générateur $I_G$ délivré par le générateur de courant se divise en deux courants, à savoir le courant de sortie $I_S$ circulant à travers la borne de sortie 30 du dispositif de récupération d'énergie et consommé par l'unité de commande 6, et un courant de charge $I_C$ circulant à travers la diode Zener D5 de la charge variable 36. La diode Zener D5 est dimensionnée en fonction de la tension utilisée par l'unité de commande 6. De par la diode Zener D5, la charge 36 présente une valeur variable en fonction du courant de sortie $I_S$, de sorte que le courant de générateur $I_G$, égal à la somme du courant de sortie $I_S$ et du courant de charge $I_C$, présente une intensité de valeur constante. L'intensité du courant de générateur $I_G$ est proportionnelle à celle du premier courant $I_1$ circulant en entrée du dispositif de récupération d'énergie 24, et l'intensité du premier courant $I_1$ présente alors une valeur constante.

Les condensateurs de stabilisation C2, C3 permettent d'amortir les oscillations du courant de sortie $I_S$, et ainsi de le stabiliser. Autrement dit, les condensateurs de stabilisation C2, C3 filtrent les hautes fréquences du courant de sortie $I_S$.

Le dispositif de récupération d'énergie 24 consomme ainsi un courant d'intensité constante à ces bornes d'entrée 28, tout en délivrant un courant de sortie $I_S$ d'intensité variable fonction de l'énergie consommée par l'unité de commande 6. L'intensité du deuxième courant $I_2$ étant en outre négligeable par rapport à celle du premier courant $I_1$, l'intensité du courant d'entrée $I_e$ du système de couplage est donc sensiblement constante, de sorte que l'impédance d'entrée $Z_e$ est également constante.

Les valeurs des résistances R2, R3 et R4 du générateur de courant sont en outre dimensionnées de sorte que le premier courant $I_1$ présente une valeur sensiblement égale à la tension d'entrée $V_e$ divisée par la valeur de l'impédance caractéristique de ligne $Z_0$ de la liaison filaire 10.

L'impédance d'entrée $Z_e$ du système de couplage est sensiblement égale à la tension $V_e$ divisée par l'intensité du premier courant $I_1$, de par l'atténuation du deuxième courant $I_2$. Autrement dit, l'impédance d'entrée $Z_e$ est sensiblement égale à l'impédance caractéristique de ligne $Z_0$ de la liaison filaire 10.

Le générateur de courant 34, la charge variable 36 et l'atténuateur 42 adaptent ainsi l'impédance d'entrée $Z_e$ à l'impédance caractéristique de ligne $Z_0$ de la liaison filaire 10. Cette adaptation est effectuée pour une plage de fréquences prédéterminée, appelée bande d'adaptation. La bande d'adaptation est notamment fonction de la valeur du condensateur de filtrage C1. La valeur du condensateur de filtrage C1 est choisie de sorte que le spectre du signal est compris dans ladite bande d'adaptation. La bande d'adaptation est également fonction des valeurs de capacités des diodes D1 à D4 et des transistors bipolaires Q1 et Q2. Les diodes D1 à D4 et les transistors bipolaires Q1 et Q2 ayant des capacités de très faible valeur, de l'ordre du pF, n'ont pas d'influence sur la bande d'adaptation.

L'adaptation de l'impédance d'entrée $Z_e$ à l'impédance caractéristique de ligne $Z_0$ est réalisée par le système de couplage 8 dans un délai inférieur à 300ns. Ce délai d'adaptation est principalement dû au pont de diodes du redresseur 32, aux transistors bipolaires Q1, Q2, Q3 du générateur de courant 34, et à la charge des condensateurs C1, C2, C3. Ce délai d'adaptation est nettement inférieur à la demi-période des signaux reçus, et ne perturbe ainsi pas la réception desdits signaux.

L'énergie électrique est disponible en sortie du dispositif de récupération d'énergie 24 après un délai d'indisponibilité inférieur à 8μs. Ce délai d'indisponibilité est principalement dû aux condensateurs de stabilisation C2, C3. Ce délai est très court, et permet ainsi un fonctionnement nominal de l'unité de commande 6.

La figure 4 illustre l'évolution d'une grandeur $S11_{dB}$ en fonction de la fréquence, la grandeur $S11_{dB}$ s'écrivant sous la forme :

$$S11_{dB} = 20 \times \log |S11| \qquad (1)$$

où S11 est le paramètre S représentant le coefficient de réflexion à l'entrée lorsque la sortie est adaptée, et s'écrivant sous la forme :

$$S11 = \frac{Ve - Zo.Ie}{Ve + Zo.Ie} = \frac{Ze - Zo}{Ze + Zo} \qquad (2)$$

On constate ainsi que la grandeur $S11_{dB}$, égale au module en décibels du paramètre S11 présente une valeur inférieure ou égale à -15dB jusqu'à environ 8 Mhz. Cette courbe est obtenue pour un signal dont la fréquence du fondamental est égale à 2,5 Mhz. On note ainsi que l'adaptation d'impédance, mesurée par la grandeur $S11_{dB}$, est meilleure que -15dB jusqu'à l'harmonique 3 des fréquences propres du signal.

La valeur de la deuxième résistance R2 est choisie de sorte que le générateur de courant 34 présente un rendement supérieur ou égal à 80%. Le système 8 présente un rendement supérieur ou égal à 60% de par le rendement supérieur ou égal à 80% du générateur de courant 34.

Lorsque le système de couplage 8 fonctionne en émission de signaux d'information, un signal de commande est délivré à la borne de commande 52 afin d'inhiber le dispositif de récupération d'énergie 24. L'intensité du premier courant $I_1$ est alors sensiblement nulle, et ne perturbe pas le signal d'information émis par l'appareil d'émission 27 à travers ses bornes de sortie 46B vers la liaison filaire 10.

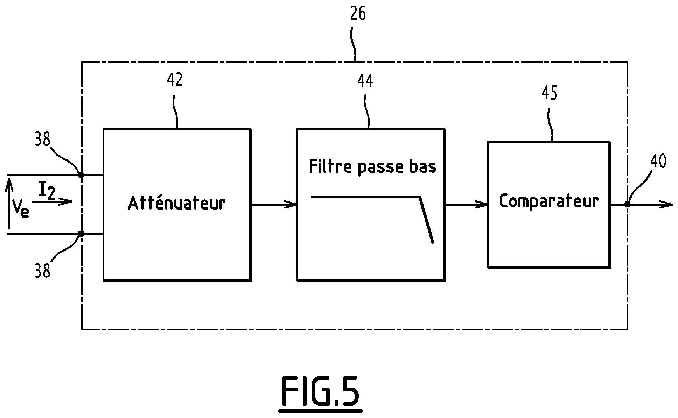

La figure 5 illustre un deuxième mode de réalisation de l'invention, pour lequel les éléments analogues au premier mode de réalisation décrit précédemment sont repérés par des références identiques.

Selon le deuxième mode de réalisation, le dispositif de transmission de données 26 est réalisé à l'aide de composants analogiques.

L'atténuateur 42 est un atténuateur analogique 30 dB, et présente une impédance de sortie correspondant à l'impédance d'entrée du filtre 44, par exemple égale à 120Ω.

Le filtre 44 est un filtre passe-bas d'ordre 5 présentant une fréquence de coupure à 1 décibel égale à 2,5 Mhz. L'atténuation du filtre passe-bas 44 est supérieure ou égale à 30 dB pour une fréquence supérieure à 6,8 Mhz. La fréquence de coupure et l'atténuation du filtre 44 sont calculées afin de conserver uniquement le spectre utile des données. La bande passante du filtre 44 est ainsi comprise dans la bande d'adaptation, et plus la bande passante du filtre 44 est étroite, plus le rapport signal sur bruit des données filtrées est élevé.

En variante, le filtre passe-bas 44 présente une fréquence de coupure à 1dB égale à 3 Mhz, ou encore à 5 MHz.

Le comparateur 45 est un comparateur analogique classique.

Le fonctionnement de ce deuxième mode de réalisation est identique à celui du premier mode de réalisation et n'est donc pas décrit à nouveau.

Les avantages de ce deuxième mode de réalisation sont identiques à ceux du premier mode de réalisation et ne sont donc pas décrits à nouveau.

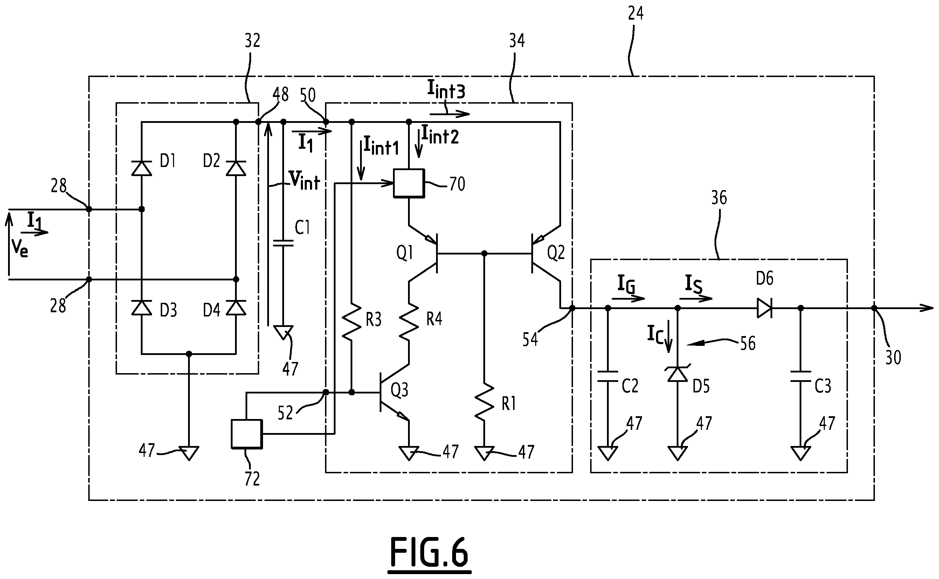

La figure 6 illustre un troisième mode de réalisation de l'invention, pour lequel les éléments analogues aux modes de réalisation décrits précédemment sont repérés par des références identiques.

Selon le troisième mode de réalisation, la deuxième résistance est remplacée par un transistor MOSFET 70, et la borne de commande 52 est reliée à un organe 72 de commande du transistor MOSFET 70 et du troisième transistor bipolaire Q3. L'organe de commande 72 comporte des moyens de mesure de la tension intermédiaire $V_{int1}$ aux bornes du premier condensateur C1.

Le fonctionnement de ce troisième mode de réalisation va à présent être décrit.

Lorsque le système de couplage 8 présente une tension d'entrée $V_e$ de valeur variable, l'organe de commande 72 mesure les variations de cette tension d'entrée $V_e$ via les moyens de mesure de la tension $V_{int}$, la tension intermédiaire $V_{int}$ étant sensiblement égale à la tension d'entrée $V_e$. L'organe de commande 72 pilote alors le générateur de courant 34 afin d'obtenir, à l'aide de la charge variable 36, un courant d'entrée $I_e$ variable et sensiblement égal à la valeur de la tension d'entrée $V_e$ divisée par la valeur de l'impédance caractéristique de ligne $Z_0$.

Le délai d'indisponibilité de l'énergie électrique étant en outre très court, le système de couplage 8 permet ainsi un fonctionnement nominal de l'unité de commande 6, lorsque la tension d'entrée $V_e$ est de valeur variable.

Les autres avantages de ce troisième mode de réalisation sont identiques à ceux des modes de réalisation précédents et ne sont donc pas décrits à nouveau.

En variante, les transistors Q1, Q2, Q3 sont des transistors MOS.

On conçoit ainsi que l'invention permet de proposer un système de couplage présentant une impédance d'entrée adaptée à l'impédance caractéristique de ligne de la liaison filaire de communication à laquelle il est relié. L'invention permet ainsi d'améliorer la transmission des données à l'unité de commande, en réduisant le taux de données corrompues par le système de couplage.

L'alimentation électrique et les données, étant issues d'un unique signal transporté sur la liaison filaire 10, présentent des spectres en fréquence identiques et confondus avec le spectre en fréquence de l'unique signal reçu en entrée du système de couplage 8 par l'intermédiaire de la liaison filaire 10.

La bande d'adaptation est, par exemple, la plage de fréquences comportant le fondamental et les deux premiers harmoniques suivant le fondamental, également appelés harmonique n°3 et harmonique n°5, du signal d'information. Le spectre du signal d'information est alors partiellement compris dans ladite bande d'adaptation.

La bande d'adaptation correspond également à la plage de fréquences pour laquelle le dispositif de récupération d'énergie 24 récupère l'énergie de l'alimentation électrique contenue dans le signal d'information reçu en entrée du système de couplage 8.

La bande d'adaptation est, par exemple, la plage de fréquences sensiblement comprise entre 0 et 20 MHz, de préférence comprise entre 0 et 15 MHz.

En variante, la bande d'adaptation est égale à l'ensemble du spectre du signal d'information, et le spectre du signal est alors totalement compris dans ladite bande d'adaptation.

Le dispositif de transmission de données 26 est, par exemple, propre à transmettre à l'unité de commande 6 seulement les données contenues dans un intervalle de fréquences prédéterminé, appelé bande de transmission La bande de transmission est comprise dans la bande d'adaptation. Autrement dit, le spectre utilisé pour la transmission des données contenues dans le signal d'information est compris dans le spectre utilisé pour récupérer l'énergie de l'alimentation électrique, également contenu dans le signal d'information.

La bande de transmission est, par exemple, l'intervalle de fréquences comportant uniquement le fondamental du signal d'information. Autrement dit, la fréquence de coupure du filtre passe-bas 44 est alors égale à la fréquence supérieure du fondamental du signal d'information, de manière à conserver uniquement le fondamental du signal d'information et à ne pas transmettre les données contenues dans les harmoniques du signal d'information.

La transmission des seules données contenues dans le fondamental du signal d'information permet d'améliorer le rapport signal sur bruit des données. En effet, le comparateur 45 est propre à déterminer les données contenues dans le signal d'information uniquement à partir de son fondamental, le bruit contenu dans les harmoniques du signal d'information étant éliminé lors du filtrage effectué par le filtre passe-bas 44. Les données sont ensuite transmises par le comparateur 45 à l'unité de commande 6.

La bande de transmission est, par exemple, l'intervalle de fréquences compris entre 0 et 5 MHz, de préférence compris entre 0 et 3 MHz.

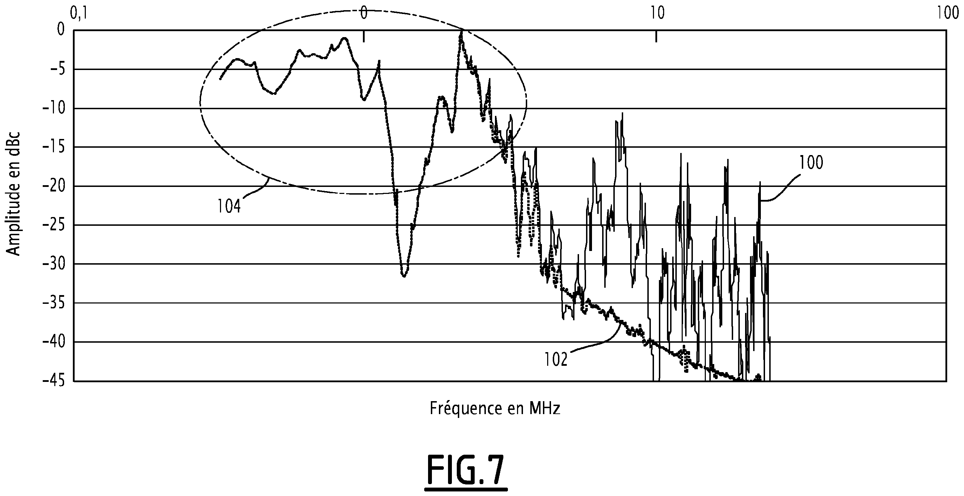

Sur la figure 7, la courbe 100 représente le spectre fréquentiel normalisé d'un premier signal d'information reçu en entrée du système de couplage 8 dont les données comportent, par exemple, une pluralité de paquets et de temps morts, chaque temps mort séparant deux paquets successifs. Les paquets utilisent, par exemple, un codage de type Manchester, et les temps morts présentent une durée, par exemple comprise entre 200 et 800 nanosecondes. La courbe 102 représente le spectre fréquentiel normalisé du signal en sortie du filtre 44 et correspondant au premier signal d'information.

Dans l'exemple de réalisation de la figure 7, le premier signal d'information présente un spectre fréquentiel dont le fondamental correspond sensiblement aux fréquences comprises entre 0 et 3 MHz comme représenté par la zone encerclée 104. Le premier harmonique suivant le fondamental (harmonique n°3) correspond sensiblement aux fréquences comprises entre 1,5 et 8 MHz, et le deuxième harmonique suivant le fondamental (harmonique n°5) correspond sensiblement aux fréquences comprises entre 3 et 15 MHz.

Dans l'exemple de réalisation de la figure 7, la bande d'adaptation est la plage de fréquences comprise entre 0 et 15 MHz, et bande de transmission est l'intervalle de fréquences compris entre 0 et 3 MHz. La fréquence de coupure du filtre passe-bas 44, par exemple, égale à 3 MHz, correspond alors à la fréquence supérieure de la bande de transmission.

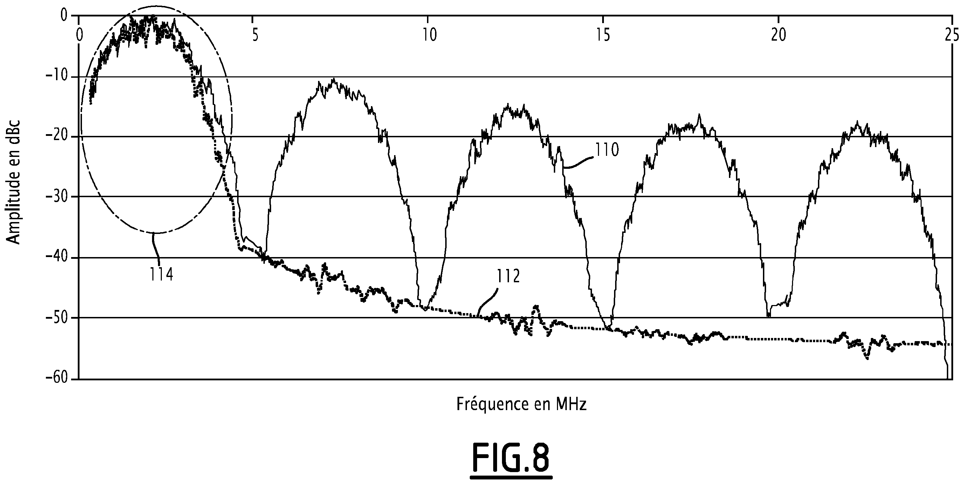

La figure 8 illustre un autre mode de réalisation de l'invention, pour lequel le signal reçu en entrée du système de couplage 8 est un deuxième signal d'information.

La courbe 110 représente le spectre fréquentiel normalisé du deuxième signal d'information reçu en entrée du système de couplage 8 dont les données comportent une pluralité de paquets successifs. Les paquets utilisent, par exemple, un codage classique de type Manchester. La courbe 112 représente le spectre fréquentiel normalisé du signal en sortie du filtre 44 et correspondant au deuxième signal d'information.

Dans l'exemple de réalisation de la figure 8, le deuxième signal d'information présente un spectre fréquentiel dont le fondamental correspond sensiblement aux fréquences comprises entre 0 et 5 MHz comme représenté par la zone encerclée 114. Le premier harmonique suivant le fondamental (harmonique n°3) correspond sensiblement aux fréquences comprises entre 5 et 10 MHz, et le deuxième harmonique suivant le fondamental (harmonique n°5) correspond sensiblement aux fréquences comprises entre 10 et 15 MHz.

Dans l'exemple de réalisation de la figure 8, la bande d'adaptation est la plage de fréquences comprise entre 0 et 15 MHz, et bande de transmission est l'intervalle de fréquences compris entre 0 et 5 MHz. La fréquence de coupure du filtre passe-bas 44, par exemple égale à 5 MHz, correspond alors à la fréquence supérieure de la bande de transmission.

On conçoit ainsi que l'invention permet de proposer un système de couplage présentant une impédance d'entrée adaptée à l'impédance caractéristique de ligne pour une large plage de fréquences prédéterminée, appelée bande d'adaptation, tout en transmettant les données uniquement contenues dans une plage de fréquences plus étroite, appelée bande de transmission, la bande de transmission étant contenue en outre dans la bande d'adaptation.

**Revendications**

1. Système (8) de couplage entre une liaison filaire de communication (10) présentant une impédance caractéristique de ligne ($Z_0$) et propre à transporter un signal comprenant simultanément une alimentation électrique et des données, et une unité de commande (6) comportant une borne d'alimentation électrique (12) et une borne de données (14), ledit système (8) présentant une impédance d'entrée ($Z_e$), et comportant des moyens (34, 36, 42) d'adaptation de l'impédance d'entrée ($Z_e$) à l'impédance caractéristique de ligne ($Z_0$),
   **caractérisé en ce que** les moyens d'adaptation (34, 36, 42) comportent une charge (36) de valeur variable en fonction d'un courant de sortie ($I_s$) consommé par l'unité de commande (6) en sortie dudit système (8), et
   **en ce qu'**il comprend un dispositif de récupération d'énergie (24) destiné à être connecté entre la liaison filaire (10) et la borne d'alimentation (12), et comportant ladite charge variable (36), et un dispositif de transmission de données (26) destiné à être connecté entre la liaison filaire (10) et la borne de données (14), et comportant un atténuateur (42) propre à diminuer fortement un deuxième courant ($I_2$), consommé en entrée dudit dispositif de transmission (26).

2. Système (8) selon la revendication 1, **caractérisé en ce qu'**il est propre à recevoir le signal comprenant simultanément l'alimentation électrique et les données, l'alimentation électrique et les données présentant un même spectre en fréquence.

3. Système (8) selon la revendication 1 ou 2, **caractérisé en ce que** les moyens d'adaptation (34, 36, 42) sont propres à adapter l'impédance d'entrée ($Z_e$) à l'impédance caractéristique de ligne ($Z_0$) pour une plage de fréquences prédéterminée, appelée bande d'adaptation, et **en ce que** le spectre du signal est au moins partiellement compris dans ladite bande d'adaptation.

**4.** Système (8) selon la revendication 3, **caractérisé en ce que** la bande d'adaptation est égale au spectre du signal reçu en entrée du système de couplage.

**5.** Système (8) selon la revendication 3, **caractérisé en ce que** la bande d'adaptation est la plage de fréquences sensiblement comprise entre 0 et 20 MHz, de préférence comprise entre 0 et 15 MHz.

**6.** Système (8) selon l'une quelconque des revendications 1 à 5, **caractérisé en ce qu'**il présente une tension d'entrée ($V_e$) de valeur constante, et **en ce que** ladite charge (36) est propre à assurer la consommation par le système (8) d'un courant d'entrée ($I_e$) constant.

**7.** Système (8) selon l'une quelconque des revendications 1 à 5, **caractérisé en ce qu'**il présente une tension d'entrée ($V_e$) de valeur variable, et **en ce que** ladite charge (36) est propre à assurer la consommation par le système (8) d'un courant d'entrée ($I_e$) variable et sensiblement égal à la valeur de la tension d'entrée ($V_e$) divisée par la valeur de l'impédance caractéristique de ligne ($Z_0$).

**8.** Système (8) selon l'une quelconque des revendications précédentes, **caractérisé en ce que** ladite charge variable (36) comprend un réservoir de courant (56) agencé en sortie d'un générateur de courant (34).

**9.** Système (8) selon l'une quelconque des revendications précédentes, **caractérisé en ce que** le dispositif de transmission de données (26) comporte un filtre passe-bas (44).

**10.** Système (8) selon l'une quelconque des revendications précédentes, **caractérisé en ce que** le dispositif de transmission de données (26) est propre à transmettre seulement les données contenues dans un intervalle de fréquences prédéterminé, appelé bande de transmission.

**11.** Système (8) selon les revendications 3 et 10 prises ensemble, **caractérisé en ce que** la bande de transmission est comprise dans la bande d'adaptation.

**12.** Système (8) selon la revendication 10 ou 11, **caractérisé en ce que** la bande de transmission est l'intervalle de fréquences sensiblement compris entre 0 et 5 MHz, de préférence compris entre 0 et 3 MHz.

**13.** Appareil (2) de commande d'au moins un interrupteur électronique (4), comprenant une unité (6) de commande du ou de chaque interrupteur électronique (4), ladite unité (6) comportant une borne d'alimentation électrique (12) et une borne de données (14), et un système (8) de couplage entre une liaison filaire de communication (10) propre à transporter un signal comprenant simultanément une alimentation électrique et des données, et ladite unité de commande (6),
**caractérisé en ce que** le système de couplage (8) est conforme à l'une quelconque des revendications 1 à 12.

**Patentansprüche**

**1.** System (8) zum Koppeln zwischen einer Kabelkommunikationsverbindung (10), welche eine charakteristische Leitungsimpedanz ($Z_0$) hat und imstande ist, ein Signal zu transportieren, welches gleichzeitig eine elektrische Versorgung und Daten aufweist, und einer Steuereinheit (6), welche einen Anschluss zur elektrischen Versorgung (12) und einen Datenanschluss (14) aufweist, wobei das besagte System (8) eine Eingangsimpedanz ($Z_e$) hat und Mittel (34, 36, 42) zum Anpassen der Eingangsimpedanz ($Z_e$) an die charakteristische Leitungsimpedanz ($Z_0$) aufweist,
**dadurch gekennzeichnet,**
**dass** die Mittel zum Anpassen (34, 36, 42) eine Last (36) mit variablem Wert in Abhängigkeit von einem Ausgangsstrom ($I_S$), welcher mittels der Steuereinheit (6) am Ausgang des besagten Systems (8) verbraucht wird, haben, und dadurch, dass es aufweist eine Vorrichtung zum Rückgewinnen von Energie (24), welche dafür bestimmt ist, zwischen die Kabelverbindung (10) und den Anschluss zur Versorgung (12) geschaltet zu sein, und welche die besagte variable Last (36) aufweist, und eine Vorrichtung zum Übertragen von Daten (26), welche dafür bestimmt ist, zwischen die Kabelverbindung (10) und den Datenanschluss (14) geschaltet zu sein, und welche einen Dämpfer (42) aufweist, welcher imstande ist, einen zweiten Strom ($I_2$) deutlich abzuschwächen, welcher am Eingang der besagten Vorrichtung zum Übertragen (26) verbraucht wird.

**2.** System (8) gemäß Anspruch 1, **dadurch gekennzeichnet, dass** es imstande ist, das Signal zu empfangen, welches gleichzeitig die elektrische Versorgung und die Daten aufweist, wobei die elektrische Versorgung und die Daten ein gleiches Frequenzspektrum haben.

**3.** System (8) gemäß Anspruch 1 oder 2, **dadurch gekennzeichnet, dass** die Mittel zum Anpassen (34, 36, 42) imstande sind, die Eingangsimpedanz ($Z_e$) an die charakteristische Leitungsimpedanz ($Z_0$) anzupassen für einen vorbestimmten Frequenzbereich, Anpassungsband genannt, und dadurch, dass das Spektrum des Signals zumindest teilweise in dem besagten Anpassungsband enthalten ist.

**4.** System (8) gemäß Anspruch 3, **dadurch gekennzeichnet, dass** das Anpassungsband gleich ist zum Spektrum des Signals, welches am Eingang des Systems zum Koppeln empfangen wird.

**5.** System (8) gemäß Anspruch 3, **dadurch gekennzeichnet, dass** das Anpassungsband das Band von Frequenzen ist, welche im Wesentlichen zwischen 0 und 20 MHz enthalten sind, vorzugsweise zwischen 0 und 15 MHz enthalten sind.

**6.** System (8) gemäß irgendeinem der Ansprüche 1 bis 5, **dadurch gekennzeichnet, dass** es eine Eingangsspannung ($V_e$) mit konstantem Wert hat, und dadurch, dass die besagte Last (36) imstande ist, den Verbrauch mittels des Systems (8) eines konstanten Eingangsstroms ($I_e$) sicherzustellen.

**7.** System (8) gemäß irgendeinem der Ansprüche 1 bis 5, **dadurch gekennzeichnet, dass** es eine Eingangsspannung ($V_e$) mit variablem Wert hat, und dadurch, dass die besagte Last (36) imstande ist, den Verbrauch mittels des Systems (8) eines Eingangsstroms ($I_e$), der variabel und im Wesentlichen gleich dem Wert der Eingangsspannung ($V_e$) geteilt durch den Wert der charakteristischen Leitungsimpedanz ($Z_0$) ist, sicherzustellen.

**8.** System (8) gemäß irgendeinem der vorherigen Ansprüche, **dadurch gekennzeichnet, dass** die besagte variable Last (36) ein Stromreservoir (56) aufweist, welches am Ausgang des Stromgenerators (34) angeordnet ist.

**9.** System (8) gemäß irgendeinem der vorherigen Ansprüche, **dadurch gekennzeichnet, dass** die Vorrichtung zum Übertragen von Daten (26) ein Tiefpassfilter (44) aufweist.

**10.** System (8) gemäß irgendeinem der vorherigen Ansprüche, **dadurch gekennzeichnet, dass** die Vorrichtung zum Übertragen von Daten (26) imstande ist, nur die Daten zu übertragen, welche in einem vorbestimmten Frequenzintervall, Übertragungsband genannt, enthalten sind.

**11.** System (8) gemäß den Ansprüchen 3 und 10 zusammen genommen, **dadurch gekennzeichnet, dass** das Übertragungsband im Anpassungsband enthalten ist.

**12.** System (8) gemäß Anspruch 10 oder 11, **dadurch gekennzeichnet, dass** das Übertragungsband das Intervall von Frequenzen ist, welche im Wesentlichen zwischen 0 und 5 MHz enthalten sind, vorzugsweise zwischen 0 und 3 MHz enthalten sind.

**13.** Vorrichtung (2) zum Steuern von mindestens einem elektronischen Unterbrecher (4), aufweisend eine Einheit (6) zum Steuern des oder jedes elektronischen Unterbrechers (4), wobei die besagte Einheit (6) einen Anschluss zur elektrischen Versorgung (12) und einen Datenanschluss (14) aufweist, und ein System (8) zum Koppeln zwischen einer Kabelkommunikationsverbindung (10), welche imstande ist, ein Signal zu transportieren, welches gleichzeitig eine elektrische Versorgung und Daten aufweist, und der besagten Einheit zum Steuern (6), **dadurch gekennzeichnet, dass** das System zum Koppeln (8) konform ist mit irgendeinem der Ansprüche 1 bis 12.

**Claims**

**1.** A coupling system (8) between a wired communications link (10) having a characteristic line impedance ($Z_0$) and capable of conveying a signal simultaneously comprising an electric power supply and data, and a control unit (6) including an electric power supply terminal (12) and a data terminal (14), said system (8) having an input impedance ($Z_e$), and including means (34, 36, 42) for matching the input impedance ($Z_e$) to the characteristic line impedance ($Z_0$) **characterized in that** the matching means (34, 36, 42) include a load (36) with a variable value depending on an output current ($I_s$) consumed by the control unit (6) at the output of said system (8), and

**in that** it comprises an energy recovery device (24) intended to be connected between the wired link (10) and the power supply terminal (12), and including said variable load (36), and a data transmission device (26) intended to be connected between the wired link (10) and the data terminal (14) and including an attenuator (42) capable of strongly reducing a second current ($I_2$), consumed at the input of said transmission device (26).

2. The system (8) according to claim 1, **characterized in that** it is capable of receiving the signal simultaneously comprising the electric power supply and the data, the electric power supply and the data having a same frequency spectrum.

3. The system (8) according to claim 1 or 2, **characterized in that** the matching means (34, 36, 42) are capable of matching the input impedance ($Z_e$) to the characteristic line impedance ($Z_0$) for a predetermined range of frequencies, called matching band, and **in that** the spectrum of the signal is at least partly comprised in said matching band.

4. The system (8) according to claim 3, **characterized in that** the matching band is equal to the spectrum of the signal received at the input of the coupling system.

5. The system (8) according to claim 3, **characterized in that** the matching band is the range of frequencies substantially comprised between 0 and 20 MHz, preferably comprised between 0 and 15 MHz.

6. The system (8) according to any one of claims 1 to 5, **characterized in that** it has an input voltage ($V_e$) of constant value, and **in that** said load (36) is capable of ensuring that a constant input current ($I_e$) is consumed by the system (8).

7. The system (8) according to any one of claims 1 to 5, **characterized in that** it has an input voltage ($V_e$) of variable value, and **in that** said load (36) is capable of ensuring that a variable input current ($I_e$) is consumed by the system (8) and substantially equal to the value of the input voltage ($V_e$) divided by the value of the characteristic line impedance ($Z_0$).

8. The system (8) according to any one of the preceding claims, **characterized in that** said variable load (36) comprises a current reservoir (56) laid out at the output of a current generator (34).

9. The system (8) according to any one of the preceding claims, **characterized in that** the data transmission device (26) includes a low-pass filter (44).

10. The system (8) according to any one of the preceding claims, **characterized in that** the data transmission device (26) is capable of only transmitting the data contained in a predetermined frequency interval, called a transmission band.

11. The system (8) according to claims 3 and 10 taken together, **characterized in that** the transmission band is comprised in the matching band.

12. The system (8) according to claim 10 or 11, **characterized in that** the transmission band is the interval of frequencies substantially comprised between 0 and 5 MHz, preferably comprised between 0 and 3 MHz.

13. A device (2) for controlling at least one electronic switch (4), comprising a unit (6) for controlling said or each electronic switch (4), said unit (6) including an electric power supply terminal (12) and a data terminal (14), and a coupling system (8) between a wired communications link (10) capable of conveying a signal simultaneously comprising an electric power supply and data, and said control unit (6),
**characterized in that** the coupling system (8) is in accordance with any one of claims 1 to 12.

FIG.1

FIG.2

26

42

38

$V_e$ $\xrightarrow{I_2}$

38

58 60

n

Filtre passe bas
20 coefficients

44

n

Comparateur

45

40

H1

H2

## FIG.3

Adaptation [dB]

Fréquence [MHz]

0

−5

−10

−15

−20

−25

−30

0    2    4    6    8    10    12    14

$S11_{dB}$

## FIG.4

26

42          44          45

38

$V_e$   $I_2 \longrightarrow$

| Atténuateur | Filtre passe bas | Comparateur |

38

40

## FIG.5

**FIG.6**

FIG.7

FIG.8

**EP 2 415 179 B1**

**RÉFÉRENCES CITÉES DANS LA DESCRIPTION**

**Documents brevets cités dans la description**

- US 20050094735 A1